# EUROPÄISCHE PATENTSCHRIFT

(11) **EP 1 485 779 B1**
(45) Veröffentlichungstag und Bekanntmachung des Hinweises auf die Patenterteilung: **27.07.2005**
(21) Anmeldenummer: 03709821.7
(22) Anmeldetag: 01.04.2003
(51) Int. Cl.: G06F 1/08

(54) **RECHENWERK UND VERFAHREN ZUM ADDIEREN**
ARITHMETIC UNIT AND ADDING METHOD
UNITE DE CALCUL ET PROCEDE D'ADDITION

(30) Priorität: 10.04.2002 DE 10215785
(43) Veröffentlichungstag der Anmeldung: 15.12.2004
(73) Patentinhaber: Infineon Technologies AG, 81669 München (DE)
(72) Erfinder: ELBE, Astrid, 81243 München (DE); JANSSEN, Norbert, 81667 München (DE); SEDLAK, Holger, 82054 Lochhofen (DE); SEIFERT, Jean-Pierre, Hillsborough, OR 97124 (US)
(74) Vertreter: Zinkler, Franz, Dipl.-Ing.
(86) Internationale Anmeldenummer: PCT/EP2003/003402
(87) Internationale Veröffentlichungsnummer: WO 2003/085499

(56) Entgegenhaltungen:
- EP-A- 0 295 409
- DE-A- 3 631 992
- US-A- 4 691 124
- US-A- 4 870 681

## Beschreibung

Die vorliegende Erfindung bezieht sich auf Rechenwerke und insbesondere auf Langzahlrechenwerke für kryptographische Aufgaben.

Die DE 3631992 C2 offenbart einen Kryptographieprozessor zur effizienten Aufführung des Public-Key-Verfahrens von Rivest, Shamir und Adleman, das auch als RSA-Verfahren bekannt ist. Die in diesem Verfahren erforderliche modulare Exponentiation wird unter Verwendung eines Multiplikations-Vorausschau-Verfahrens und eines Reduktions-Vorausschau-Verfahrens berechnet. Hierzu wird ein Drei-Operanden-Addierer verwendet. Der offenbarte Drei-Operanden-Addierer hat eine Länge von 660 Bits. Eine Elementarzelle besteht aus mehreren Kryptoregistern, einem Schieber, einem Halb-Addierer, einem VollAddierer und einem Carry-Look-Ahead-Element. Vier derartige Elementarzellen bilden einen Vier-Zellen-Block, wobei dem Vier-Zellen-Block ein Carry-Look-Ahead-Element zugeordnet ist. Fünf derartige Vier-Zellen-Blöcke bilden einen 20-Zellen-Block. Die Verschlüsselungseinheit besteht insgesamt aus 33 solchen 20-Zellen-Blöcken und einer Steuereinheit, die einen Taktgenerator zum Takten der Elementarzellen umfaßt. Die Carry-Look-Ahead-Elemente der Vier-Zellen-Blöcke sind zusammengeschaltet, um zu erkennen, ob sich ein Carry, d. h. ein Übertrag, über eine größere Distanz, nämlich 20 Bits, ausbreitet. Wenn ein Propagate-Signal des 20-Bit-Blocks aktiv ist, so bedeutet dies, daß der Übertrag des betrachteten 20-Bit-Blocks von einem Übertrag am Ausgang des vorausgehenden Blocks abhängt. Wenn das Propagate-Signal eines 20-Bit-Blocks dagegen nicht aktiv ist, bedeutet dies, daß ein möglicherweise vorhandenes Carry am Ausgang dieses Blocks, d. h. am höchstwertigen Bit dieses Blocks, innerhalb dieses Blocks erzeugt worden ist, jedoch nicht durch den vorausgehenden Block beeinflußt ist.

Damit ist es möglich, den Takt des Rechenwerks, d. h. die Rate, mit der neue Eingangsoperanden eingespeist werden, schneller zu machen als den Worst-Case-Fall, bei dem sich der Carrypfad vom niederstwertigen Bit des gesamten Rechenwerks bis zum höchstwertigen Bit des gesamten Rechenwerks erstreckt. Wird ein Propagate-Signal für einen 20-Bit-Block aktiviert, so wird der Takt des gesamten Rechenwerks so verlangsamt, daß der Worst-Case-Fall berücksichtigt wird, d. h. das Rechenwerk wird so lange angehalten, bis sich ein Carry vom niederstwertigen Bit des gesamten Rechenwerks bis zum höchstwertigen Bit des gesamten Rechenwerks ausgebreitet hat.

Die Zykluszeit, d. h. die Zeit, nach der nächste Eingangsoperanden in das Rechenwerk eingespeist werden, wird daher so eingestellt, daß sie gerade ausreicht, um den Übertrag direkt benachbarter Blöcke zu verarbeiten. Dies hat den Vorteil, daß unabhängig von der Anzahl der Stellen des Rechenwerks nur die Zeit für die Verarbeitung eines Block-Übertrags zwischen zwei benachbarten Blöcken berücksichtigt zu werden braucht. Wenn dagegen festgestellt wird, daß der Übertrag des aktuellen Blocks nicht nur vom vorherigen Block, sondern von dem dem vorherigen Block vorausgehenden Block beeinträchtigt wird, so wird die Zykluszeit so langsam gemacht, daß für einen vollständigen Carry-Pfad ausreichend Zeit vorhanden ist.

Das beschriebene Konzept ist insofern vorteilhaft, daß nicht mehr die Länge des Rechenwerks die Geschwindigkeit bestimmt, sondern daß die Geschwindigkeit mit der Blocklänge, d. h. mit der Länge des zu erwartenden Carry-Pfads, der von der BlockLänge abhängt, korrespondiert.

Das beschriebene Verfahren ist jedoch dahingehend nachteilhaft, daß, wenn festgestellt wird, daß sich ein Carry über eine längere Distanz als einen Block ausbreitet, d. h. wenn ein sogenanntes Panik-Signal erzeugt wird, das Rechenwerk insgesamt angehalten wird, um den Worst-Case-Fall zu berücksichtigen. Wird daher die Länge eines Blocks kurz gewählt, was an sich wünschenswert ist, da die Taktperiode dann erhöht werden kann (die Zykluszeit kann verringert werden), so wird kein wesentlicher Geschwindigkeitsgewinn mehr eintreten, da Panik-Signale häufiger auftreten, so daß das Rechenwerk insgesamt durch den ständigen Panikfall "ausgebremst" wird.

Wird dagegen die Länge eines Blocks relativ lang gewählt, um die Anzahl der Panik-Fälle zu verringern bzw. nahezu zu eliminieren, muß damit einhergehend auch die Zykluszeit erhöht werden, da dieselbe so groß sein muß, daß maximal der Fall (der normale Worst-Case-Fall) berücksichtigt wird, bei dem ein Übertrag im niederstwertigen Bit des vorausgehenden Blocks erzeugt wird, den restlichen vorausgehenden Block durchläuft und ferner den aktuellen Block nahezu vollständig durchläuft, wenn z. B. im höchstwertigen Bit des aktuellen Blocks ein Kill-Parameter zu finden ist.

Eine kurze Blocklänge führt somit zwar zu einer höheren Taktrate, führt jedoch insgesamt wieder zu einer reduzierten Performance des Rechenwerks aufgrund der stark zunehmenden Anzahl von Panikfällen. Eine lange Zykluszeit, d. h. eine geringe Taktrate, führt dagegen zu einer abnehmenden Anzahl von Panik-Fällen, ist jedoch dahingehend nicht wünschenswert, daß aufgrund der geringen Taktrate in einer bestimmten Zeit auch nur eine begrenzte Anzahl von Additionsvorgängen durchgeführt werden kann.

Die Aufgabe der vorliegenden Erfindung besteht darin, ein schnelleres Addiererkonzept zu schaffen.

Diese Aufgabe wird durch ein Rechenwerk nach Patentanspruch 1 oder durch ein Verfahren zum Addieren nach Patentanspruch 14 gelöst.

Der vorliegenden Erfindung liegt die Erkenntnis zugrunde, daß die insgesamte Leistungsfähigkeit eines Rechenwerks dadurch verbessert werden kann, daß eine zwei- oder mehrstufige Panik-Hierarchie verwendet wird. Dies ermöglicht es, kürzere Blöcke zu verwenden, was unmittelbar in einer geringeren Zykluszeit, d. h. einer höheren Taktrate resultiert. Falls ein Block ein Paniksignal ausgibt, wird dies jedoch nicht dazu verwendet, gleich den absoluten Worst-Case-Fall zu berücksichtigen. Das Rechenwerk wird lediglich etwas langsamer getaktet, und zwar so langsam, daß sich der Übertrag über den Block, der das Panik-Signal ausgelöst hat, nahezu (weniger einer Elementarzelle) den gesamten nächsten Block, d. h., den Block zu höherwertigen Bits hin, und durch die Elementarzellen des vorausgehenden Blocks weniger einer Elementarzelle ausbreiten kann. Das Rechenwerk wird daher im Vergleich zu seiner ursprünglichen Taktrate nur ein wenig verzögert und nicht komplett angehalten, um den Worst-Case-Fall zu berücksichtigen. Im Falle einer zwei-stufigen Panikhierarchie wird das Rechenwerk erst dann für den Worst-Case-Fall verlangsamt, wenn zwei benachbarte Blöcke ein Panik-Signal ausgeben, d. h. wenn ein Double-Panik-Fall vorhanden ist. Erst in diesem Fall wird das Rechenwerk insgesamt auf den Worst-Case-Fall verlangsamt.

Im Falle einer drei-stufigen Panikhierarchie würde im Fall einer Panik in zwei benachbarten Blöcken das Rechenwerk nicht vollständig abgebremst, sondern nur wiederum so langsam getaktet, daß sich der Übertrag über vier Blöcke weniger zwei Elementarzellen ausbreiten kann. Erst in dem Fall, in dem drei aufeinanderfolgende Blöcke ein Panik-Signal ausgeben, wird das Rechenwerk insgesamt so lange angehalten werden, daß sich der Übertrag von dem niederstwertigen Bit des Rechenwerks bis zu dem höchstwertigen Bit des Rechenwerks ausbreiten kann.

Bei einem bevorzugten Ausführungsbeispiel der vorliegenden Erfindung wird pro Block ein Übertrag-Umweg (Carry-Bypass) vorgesehen. In diesem Fall kann der eigentlich ungünstige Panik-Fall, bei dem ein Übertrag einen Block vollständig durchläuft, vorteilhaft ausgenutzt werden, nämlich dahingehend, daß der Übertrag des vorausgehenden Blocks gleich auf den Übertrag-Umweg gelegt wird, auf dem sich der Übertrag wesentlich schneller ausbreitet, als wenn er im Falle eines Ripple-Addierers durch den Block hindurch rippelt. Bei einem Panik-Ereignis muß das Rechenwerk daher lediglich schwach verzögert werden, da der Übertrag für den Block, der das Panik-Ereignis ausgelöst hat, auf den Übertrag-Umweg gelegt wird.

Selbst in dem Fall, bei dem zwei benachbarte Blöcke ein Panik-Signal auslösen, ist ein Carry-Umweg noch vorteilhaft, da auch die Zeit, um die das Rechenwerk für den Worst-Case-Fall verzögert wird, kleiner ist als in dem Fall, bei dem kein Carry-Umweg vorhanden ist. Insbesondere kann die Worst-Case-Zeit um die Differenz-Zeitspanne verkürzt werden, die ein Übertrag zum Durchlaufen der zwei Panik-Blöcke benötigt, wobei jedoch die relativ kurze Zeit, die der Übertrag benötigt, um den Übertrag-Umweg zu durchlaufen, noch zu berücksichtigen ist.

Ferner wird es auch bevorzugt, innerhalb eines Blocks Unterblöcke, denen wieder Übertrag-Umwege zugeordnet sind, vorzusehen, um in dem Fall, in dem in einem Unterblock lauter Propagate-signale sind, einen solchen Unterblock-Übertrag-Umweg zu verwenden.

Das erfindungsgemäße mehrstufige Panik-Konzept kann entweder ausgenutzt werden, um die Zykluszeit so stark zu verringern, daß zwar häufig ein Panik-Fall auftritt, der jedoch nicht zu einer wesentlichen Geschwindigkeitsverringerung führt, und selten ein Double-Panik-Fall auftritt, der zu einer erheblichen Abbremsung des Rechenwerks führt, oder aber dafür ausgenutzt werden, daß relativ selten ein Panik-Fall auftritt und nahezu niemals ein Doppel-Panik-Fall.

Erfindungsgemäß wird eine Blocklänge zwischen 8 und 16 Bit bevorzugt.

Bevorzugte Ausführungsbeispiele der vorliegenden Erfindung werden nachfolgend Bezug nehmend auf die beiliegende Figur detailliert erläutert. Es zeigt:

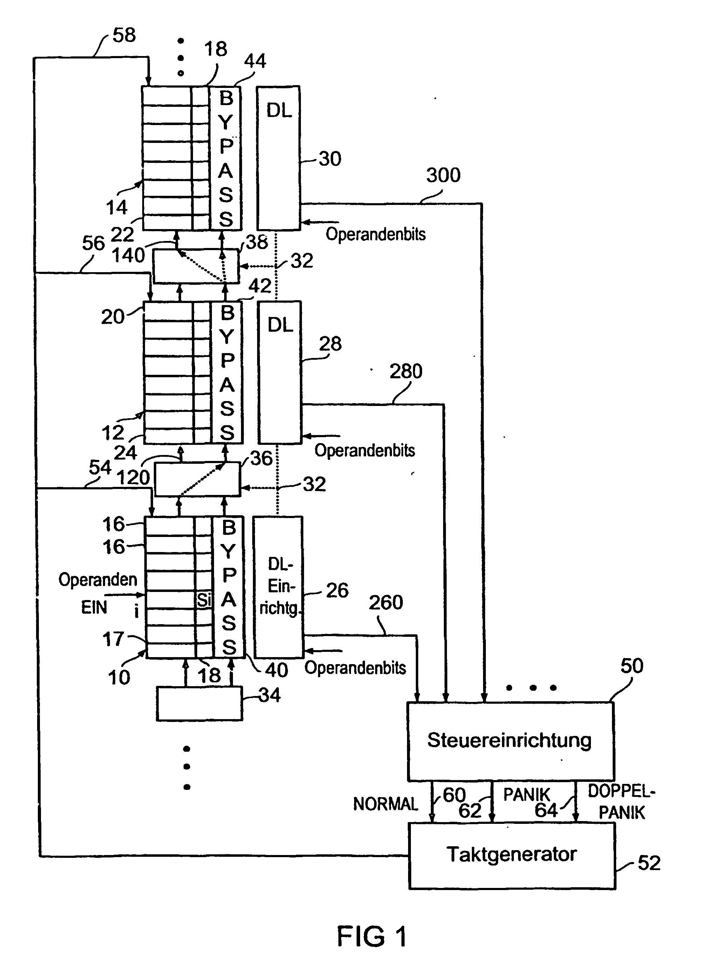

- Fig. 1: ein Blockschaltbild des erfindungsgemäßen Rechenwerks.

Fig. 1 zeigt ein erfindungsgemäßes Rechenwerk mit einem ersten Addiererblock 10, einem zweiten Addiererblock 12 und einem dritten Addiererblock 14. Die drei Addiererblöcke 10, 12, 14 sind typischerweise Addiererblöcke eines Rechenwerks mit einer wesentlich größeren Anzahl von Addiererblöcken, beispielsweise 64 für ein Rechenwerk mit einer Gesamtlänge von 1024 Bits, wobei ein Block 16 Elementarzellen umfaßt, oder 128 für ein Rechenwerk mit 2048 Bit, wenn ein Addiererblock eine Länge von 16 Bit hat. Solche Rechenwerkslängen sind erforderlich, um das RSA-Verfahren mit entsprechenden Schlüssellängen von 1024 oder 2048 Bits durchführen zu können. In der Elliptische-Kurven-Kryptographie kann eine entsprechende Sicherheit mit wesentlich geringeren Schlüssellängen erreicht werden, wie z. B. 160 Bit, wobei hierzu 10 Addiererblöcke a 16 Bits ausreichend sind.

Jeder Addiererblock 10, 12, 14 besteht aus einer Anzahl von Elementarzellen 16, die typischerweise identisch aufgebaut sind. Jede Elementarzelle kann, wie es auch im Stand der Technik der Fall ist, Register zum Speichern von 2, 3 oder mehreren Operanden, einen Schieber und einen Addierer umfassen, und umfaßt typischerweise auch ein Ausgangsregister zum Speichern eines Summenbits der Operation Sᵢ, wie es in Fig. 1 bei 18 gezeigt ist. Der Addierer innerhalb einer Elementarzelle kann je nach Bedarf ein Ein-Bit-Volladdierer sein, d. h. ein Addierer, der als Eingangsgrößen zwei Bits sowie einen Übertrag einer niederwertigen Elementarzelle empfängt, und der als Ausgangsgrößen ein Summenbit Sᵢ sowie einen Übertrag für die höherwertige benachbarte Elementarzelle ausgibt. Alternativ kann der Addierer innerhalb einer Elementarzelle auch eine Kombination aus einem Halbaddierer und einem Volladdierer sein, um eine Drei-Operanden-Operation zum Summieren von drei unterschiedlichen Operanden durchzuführen. Sämtliche verwendeten Addierer innerhalb einer Elementarzelle haben die Eigenschaft, daß sie ein Übertragbit an die nächsthöhere Elementarzelle liefern, daß sie ein Summenbit Sᵢ liefern, und daß sie einen Übertrag einer nächstniedrigeren Elementarzelle empfangen.

Wie es in Fig. 1 gezeigt ist, sind die Addiererblöcke 10, 12, 14 derart miteinander verschaltet, daß immer die höchstwertige Elementarzelle, wie z. B. die Elementarzelle 20 des zweiten Addiererblocks 12, mit der niederstwertigen Elementarzelle 22 des dritten Addiererblocks 14 verbunden ist. Entsprechend ist die niederstwertige Elementarzelle 24 mit der höchstwertigen Elementarzelle 16 des ersten Addiererblocks 10 verbunden.

Jeder Addiererblock umfaßt ferner eine Übertrag-Durchlaufeinrichtung 26, 28 bzw. 30, die als Eingangssignal die Operandenbits des Ein-Bit-Volladdierers innerhalb einer Elementarzelle empfängt, und die ausgangsseitig ein Paniksignal 260, 280, 300 liefert.

Wie später ausgeführt wird, liefert jede Durchlauf-Einrichtung ferner ein Steuersignal 32, um eine entsprechende Übertrag-Steuereinrichtung 34, 36, 38 zu veranlassen, einen Übertrag auf einen Übertrag-Bypass (Übertrag-Umweg) 40, 42 oder 44 zu legen bzw. einen Übertrag von einem nächstniedrigeren Block nicht von der höchstwertigen Elementarzelle dieses Blocks zu nehmen, sondern von dem Übertrag-Bypass dieses Blocks, wenn auf den Übertrag-Bypass ein Übertrag gelegt worden ist.

Das erfindungsgemäße Rechenwerk umfaßt ferner eine Steuereinrichtung 50 sowie einen Taktgenerator 52, der über Taktsteuerleitungen 54, 56, 58 den Takt bzw. die Taktperiode steuert, mit der neue Eingangsoperanden in die Elementarzellen der Addiererblöcke eingespeist werden.

Bei dem in Fig. 1 gezeigten Ausführungsbeispiel kann der Taktgenerator mit drei verschiedenen Geschwindigkeiten laufen, einmal mit einer schnellen Geschwindigkeit in einem Normalzustand 60, alternativ hierzu mit einer mittleren Geschwindigkeit 62 im Falle einer Panik und mit einer langsamen Geschwindigkeit 64 im Falle einer Doppel-Panik.

Es sei darauf hingewiesen, daß die Geschwindigkeits-Steuerung des Taktgenerators entweder durch tatsächliche Steuerung des Taktgenerators erfolgen kann, so daß derselbe tatsächlich langsamer oder schneller taktet.

Aus Gründen der einfacheren Impelementierbarkeit wird es hingegen bevorzugt, den eigentlichen Grund-Taktgenerator immer konstant laufen zu lassen und nicht mehr bei jeder Taktperiode zu addierende Eingangswerte in die Addiererblöcke, d. h. die tatsächlichen Einzel-Rechenwerke, einzuspeisen, sondern sogenannte Leertakte einzufügen. Das Einfügen von Leertakten bedeutet, daß nicht mehr z. B. bei jedem Takt des Taktgenerators zu addierende Eingangswerte eingespeist werden, sondern z. B. nur nach jedem dritten, vierten, fünften, ..., Takt des Grund-Taktgenerators.

Im nachfolgenden wird auf den Betrieb des in Fig. 1 gezeigten Rechenwerks eingegangen. Zunächst wird davon ausgegangen, daß der Normalfall existiert, d. h. daß das Rechenwerk vom Taktgenerator 52 mit der Normalgeschwindigkeit 60 getaktet wird. Der Normalfall liegt dann vor, wenn keine der Durchlauf-Einrichtungen 26, 28, 30 bestimmt, daß ein Übertrag einen gesamten Addiererblock 10, 12, 14 durchläuft. Dies bedeutet, in anderen Worten, daß in jedem Addiererblock eine Elementarzelle vorhanden ist, die einen möglicherweise auf dieselbe auftreffenden Übertrag absorbiert.

Ob eine Elementarzelle einen Übertrag absorbiert, einen Übertrag erzeugt oder einen Übertrag weder absorbiert noch erzeugt, sondern einfach weiterleitet, kann mittels der sogenannten Carry-Look-Ahead-Parameter Kill, Generate und Propagate berechnet werden. Dies ist in der Technik bekannt und beispielsweise in "Computer Architecture: A Quantitative Approach", Hennessy & Patterson, Second Edition, Morgan Kaufmann Publishers, Inc., 1996, Anhang A, beschrieben.

Für eine Zwei-Operanden-Addition werden die Carry-Look-Ahead-Parameter folgendermaßen berechnet:

Der Kill-Parameter gibt an, daß ein Übertrag, der möglicherweise von einer niederwertigen Elementarzelle kommt, absorbiert wird. Der Kill-Parameter berechnet sich aus der ODER-Verknüpfung der beiden Eingangsoperandenbits und ist aktiv, wenn die ODER-Verknüpfung der Eingangsoperandenbits eine 0 ergibt. Im Falle eines aktiven Kill-Parameters geht der Übertrag also ins Summenbit. Ist der ankommende Übertrag gleich "1", so ist das Summenbit gleich "1". Ist der ankommende Übertrag dagegen gleich "0", so ist das Summenbit auch gleich "0". Auf jeden Fall durchbricht ein aktiver "Kill"-Parameter den Übertrag-Pfad.

Der Generate-Parameter berechnet sich aus der UND-Verknüpfung der Eingangsoperanden und zeigt an, daß diese Elementarzelle einen Übertrag erzeugen wird. Der Generate-Parameter ist aktiv, wenn die UND-Verknüpfung der beiden Eingangsoperandenbits eine 1 ergibt. Auch ein aktiver Generate-Parameter führt zu einer Unterbrechung des Übertrag-Pfads. Ein ankommender Übertrag von "1" "fließt" ins Summenbit und wird dort absorbiert. Im Gegensatz zum Kill-Parameter wird beim Generate-Parameter dagegen ein neuer Übertrag erzeugt, was beim Kill-Parameter natürlich nicht der Fall ist. Im Hinblick auf die Unterbrechung des Carry-Pfades verhalten sich jedoch Generate und Kill identisch.

Der Propagate-Parameter wird aus der ODER-Verknüpfung der beiden Eingangsoperandenbits für eine Elementarzelle berechnet und zeigt an, daß ein Übertrag eine Elementarzelle einfach durchlaufen würde. Der Propagate-Parameter ist aktiv, wenn die ODER-Verknüpfung der beiden Eingangsbits für die Elementarzelle gleich 1 ist und die UND-Verknüpfung der beiden Eingangsbits (Generate) nicht gleich Eins ist.

Eine bevorzugte Implementation einer Durchlauf-Einrichtung, wie z. B. der Durchlauf-Einrichtung 28 des zweiten Addiererblocks 12 besteht darin, daß in der Durchlauf-Einrichtung sämtliche Propagate-Parameter der Elementarzellen UNDverknüpft werden. Ein Panik-Signal 280 wird dann ausgegeben, wenn die Durchlaufeinrichtung 28 bestimmt, daß ein Übertrag den zweiten Addiererblock vollständig durchläuft, d. h. daß im zweiten Addiererblock keine Elementarzelle einen aktiven Kill-Parameter oder Generate-Parameter erzeugt.

In diesem Fall ist der Carry-Pfad länger als ein Addiererblock, und das Rechenwerk muß langsamer getaktet werden, wie später erläutert wird.

In dem Fall, in dem keine Durchlaufeinrichtung ein Panik-Signal erzeugt, ist es jedoch sichergestellt, daß der Übertrag-Pfad kürzer als ein Addiererblock ist, so daß das Rechenwerk mit der schnellen Normal-Geschwindigkeit 60 betrieben werden kann. In einem Takt gemäß der Normal-Geschwindigkeit 60 muß ein Block, z. B. der zweite Addiererblock 12, in der Lage sein, seine Summen-Bits Sᵢ auszugeben. Summen-Bits können erst ausgegeben werden, wenn die Überträge der nächstniedrigeren Elementarzellen vorhanden sind. Nachdem keine Durchlauf-Einrichtung ein aktives Panik-Signal erzeugt hat, und nachdem insbesondere die Durchlauf-Einrichtung 26 kein Panik-Signal erzeugt hat, ist sichergestellt, daß der Eingangs-Obertrag 120 im schlechtesten Fall in der niedrigsten Elementarzelle 17 des ersten Addiererblocks erzeugt wird und dann - im schlechtesten Fall - den gesamten restlichen ersten Addiererblock durchläuft, als Übertrag in den zweiten Addiererblock 12 eintritt und - im schlechtesten Fall - erst in dem höchstwertigen Einzeladdierer 20 der zweiten Addiererblocks absorbiert wird. Der Takt im Normalfall darf daher höchstens so schnell sein, daß sich der Übertrag von der niedrigsten Stelle 17 des ersten Addiererblocks durch den gesamten restlichen ersten Addiererblock und bis zum höchstwertigen Einzeladdierer des zweiten Addiererblocks ausbreiten kann, um die Summen-Bits für den ersten und den zweiten Addiererblock 12 ermitteln zu können.

Die Verarbeitung im Hinblick auf den zweiten Addiererblock 12 findet somit gewissermaßen in zwei Phasen statt. Zunächst wird der Eingangs-Übertrag 120 bestimmt. Sobald der Eingangs-Übertrag 120 bekannt ist, werden dann, in einer zweiten Phase, die Summen-Bits des zweiten Addiererblocks 12 ausgegeben. Eine ähnliche Vorgehensweise wird, hierzu parallel, mit sämtlichen anderen Blöcken durchgeführt, so daß im Normalfall, d. h. wenn kein Panik-Signal 260, 280, 300 aktiv ist, mit einem Takt getaktet werden kann, dessen Taktperiode so groß ist, daß ein Übertrag zumindest einen Teil des vorausgehenden Blocks, nämlich im Worst-Case sämtliche Elementarzellen des vorausgehenden Blocks weniger einer Elementarzelle durchlaufen kann, und ferner den gesamten aktuellen Block weniger einer Elementarzelle durchlaufen kann. In einer möglichen Implementation wird typischerweise nicht unmittelbar an diese Grenze gegangen, sondern es wird ein Sicherheitsfaktor im Bereich von 5 bis 10% in Richtung einer größeren Taktperiode, mit der die zu addierenden Eingangswerte eingespeist werden, bevorzugt.

Im nachfolgenden wird auf den Fall eingegangen, bei dem eine Durchlauf-Einrichtung, wie z. B. die Durchlauf-Einrichtung 28, ein Panik-Signal 280 erzeugt. Dies bedeutet, daß der Eingangs-Übertrag 140 in den dritten Addiererblock 14 nicht durch den zweiten Addiererblock 12, sondern durch den ersten Addiererblock 10 bestimmt ist. In diesem Panik-Fall würde die Normalgeschwindigkeit des Taktgenerators zu Fehlern führen. Daher wird der Taktgenerator 52 durch die Steuereinrichtung 50 auf eine Panik-Geschwindigkeit 62 gesteuert, die etwas langsamer als im Normalfall ist. Insbesondere wird die Taktgeschwindigkeit, mit der die Operanden eingespeist werden, so eingestellt, daß sich ein Übertrag, der im schlimmsten Fall in der niedrigsten Elementarzelle 17 des ersten Addiererblocks erzeugt wird, durch den zweiten Addiererblock 12 hindurch vollständig ausbreiten kann, da erst dann der Eingangs-Übertrag 140 in dem dritten Addiererblock 14 vorhanden ist. Der Panik-Takt muß ferner so langsam sein, daß dann, wenn der Übertrag 140 vorliegt, der Übertrag den zweiten Addiererblock 14 bis zur letzten Elementarzelle (im schlimmsten Fall) durchlaufen kann. Im Panik-Fall wird der Takt daher so langsam sein, daß der Übertrag sämtliche Elementarzellen weniger einer Elementarzelle des ersten Addiererblocks durchlaufen kann, daß der Übertrag den zweiten Addiererblock vollständig durchlaufen kann, und daß der Übertrag ferner den dritten Addiererblock 14 nahezu vollständig durchlaufen kann. In bevorzugten Fällen wird dieser Wert nicht unmittelbar verwendet, sondern es wird typischerweise ebenfalls ein Sicherheitsfaktor im Bereich von 5 bis 10% zu der theoretisch maximalen Panik-Taktperiode hinzugefügt.

Es wird bevorzugt, jeden Addiererblock mit einem Carry-Bypass zu versehen. Dadurch kann die Taktperiode im Panik-Fall verringert werden. Nachdem die zweite Durchlauf-Einrichtung 28 bereits bestimmt hat, daß sich der Übertrag vollständig durch den zweiten Addiererblock 12 hindurch ausbreitet, d. h. nicht durch den zweiten Addiererblock 12 beeinflußt wird, wird der Übertrag am Ausgangs des ersten Addiererblocks mittels der Übertrag-Steuereinrichtung 36 auf den Übertrag-Bypass 42 des zweiten Addiererblocks 12 gelegt und von dort mittels der Übertrag-Steuereinrichtung 38 in die niederstwertige Stelle des dritten Addiererblocks 14 eingespeist, wie es durch gestrichelte Pfeile in den Blöcken 36 und 38 dargestellt ist. In diesem Fall muß die Panik-Taktperiode im Vergleich zum Normalfall nur um die Zeit länger sein, die der Übertrag benötigt, um sich über den Übertrag-Bypass 42 des zweiten Addiererblocks auszubreiten. Diese Zeit ist typischerweise wesentlich geringer als wenn ein vollständiger Übertrag-Ripple durch einen Addiererblock gewartet werden müßte, so daß die Taktperiode im Panikfall nicht sehr viel länger ist als im Normalfall.

Stellt die Steuereinrichtung 50 dagegen fest, daß zwei benachbarte Durchlauf-Einrichtungen, wie z. B. die Durchlauf-Einrichtung 28 und die Durchlauf-Einrichtung 30, bestimmt haben, daß ein Übertrag beide Blöcke durchläuft, so ist der Fall der Doppel-Panik gegeben. In diesem Fall wird der Übertrag des nächsthöheren Addiererblocks, der in Fig. 1 nicht mehr gezeigt ist, von den Elementarzellen des ersten Addiererblocks 10, und zwar im Worst-Case von der niedrigsten Elementarzelle 17 des ersten Addiererblocks 10 bestimmt. In diesem Fall würde, wenn der Takt nicht reduziert wird, ein Fehler auftreten, da bereits die nächsten Operanden in das Rechenwerk eingespeist werden würden, bevor der dem zweiten Addiererblock 14 nachgeschaltete höherer Addiererblock (in Fig. 1 nicht gezeigt) mit der Ausgabe der Summenbits fertig ist.

Erfindungsgemäß wird daher bei dem hier gezeigten Ausführungsbeispiel das Rechenwerk so verlangsamt, als ob sich ein Übertrag von der niederstwertigen Stelle des gesamten Rechenwerks bis zur höchstwertigen Stelle des gesamten Rechenwerks ausbreiten würde. Um diese Zeit zu verkürzen, werden der Übertrag-Umweg 42 und der Übertrag-Umweg 44 verwendet. Nachdem die beiden Blöcke 12 und 14 den Übertrag nicht beeinflussen, wird der Übertrag durch den Block 36 auf den Übertrag-Bypass 42 gelegt und durch den Block 38 nicht, wie im vorher beschriebenen Fall, in den zweiten Addiererblock 14 eingespeist, sondern direkt auf den Übertrag-Umweg 44 des zweiten Addiererblocks geleitet. Die gesamte Dauer, die ein Übertrag von der niederstwertigen Stelle des Rechenwerks bis zur höchstwertigen Stelle des Rechenwerks benötigt, verkürzt sich somit wenigstens durch die Verwendung der beiden Übertrag-Umleitungen 42 und 44.

Es ist zu sehen, daß ein Doppel-Panikfall zu einer sehr deutlichen Abbremsung des Rechenwerks führt. Um diesen Total-Abbremsungs-Fall noch seltener zu machen, kann eine dritte Panik-Ebene eingeführt werden, die darin besteht, daß drei benachbarte Durchlauf-Einrichtungen, wie z. B. die Durchlauf-Einrichtungen, 26, 28, 30 bestimmen, daß ein Übertrag ihre entsprechenden Addiererblöcke vollständig durchläuft. Ist eine Tripel-Panik-Einrichtung vorhanden, so muß im Fall der Doppelpanik das Rechenwerk nicht auf den insgesamten Worst-Case abgebremst werden, sondern muß, in Analogie zur Einfach-Panik lediglich so stark abgebremst werden, daß der Übertrag zumindest einen Teil des ersten Addiererblocks (nämlich im schlimmsten Fall alle Bits weniger einem Bit), die beiden Übertrag-Umwege 42 und 44 sowie den nächsthöheren in Fig. 1 nicht mehr gezeigten Block nahezu vollständig durchlaufen kann. Ist somit eine Tripel-Panik-Einrichtung vorhanden, so unterscheidet sich die Taktperiode im Falle von Doppel-Panik lediglich dadurch von der Taktperiode im Fall von Einfach-Panik, daß sie die Zeitdauer länger ist, die ein Übertrag benötigt, um den Übertrag-Umweg 44 zu durchlaufen.

Beliebig viele Panik-Stufen können verwendet werden, wobei jedoch der Nutzen durch eine weitere Panikstufe im Vergleich zu dem zusätzlichen Schaltungsaufwand, um den höheren Panik-fall festzustellen, immer mehr zurücktritt. Andererseits kann mit jeder höheren Panikstufe die Anzahl von Elementarzellen in einem Addiererblock immer weiter reduziert werden, was unmittelbar dazu führt, daß der Normaltakt 60 immer weiter erhöht werden kann.

Es sei darauf hingewiesen, daß die Addiererblöcke intern eine beliebige Kombination von Rechenwerken haben können. Der einfachste Fall besteht darin, daß jeder Addiererblock als einfacher Ripple-Carry-Addierer aufgebaut ist, der, zusätzlich zu einem einfachen Ripple-Carry-Addierer, pro Elementarzelle noch das Propagate-Signal erzeugen sollte, damit die Durchlauf-Einrichtung auf der Basis der Propagate-Signale arbeiten kann.

Falls sämtliche Addiererblöcke vollständig als Ripple-Carry-Addierer aufgebaut sind, so muß die Taktperiode im Normalfall zumindest so lang sein, daß ein Übertrag durch sämtliche Elementarzellen eines Addiererblocks weniger einer Elementarzelle und durch sämtliche Elementarzellen eines nachgeschalteten Addiererblocks weniger einer Elementarzelle "durchrippeln" kann.

Diese Zeit kann jedoch dadurch verkürzt werden, daß ein Addiererblock vollständig als Carry-Look-Ahead-Addierer aufgebaut wird. In diesem Fall liegt das Übertrag-Eingangsbit in den zweiten Addiererblock 12, d. h. das Übertrag-Bit 120 wesentlich schneller vor.

Carry-Look-Ahead-Addierer arbeiten zwar sehr schnell, benötigen jedoch wesentlich mehr Chipfläche. Aus diesem Grund ist auch ein Kompromiß dahingehend möglich, daß kleinere Carry-Look-Ahead-Addierer-Unterblöcke gebildet werden, die gemäß einem Ripple-Carry-Addierer zusammengeschaltet werden, um einen Addiererblock 10, 12 oder 14 zu erzeugen. Die tatsächliche Addiererauslegung innerhalb eines Blocks wird von den praktischen Gegebenheiten diktiert sein. In diesem Fall wird es bevorzugt, auch für einen Unterblock einen Carry-Bypass einzusetzen. Falls ein Block beispielsweise sechzehn Elementarzellen hat und vier Unterblöcke gebildet sind, so kann ein Carry-Umweg für einen Unterblock aktiviert werden, wenn alle Elementarzellen des Unterblocks einen aktiven Propagate-Parameter haben.

Wie es bereits ausgeführt worden ist, ist das erfindungsgemäße Rechenwerk für Kryptographie-Prozessoren besonders geeignet, da diese typischerweise Langzahl-Rechenwerke benötigen, mit einer Länge in der Größenordnung von 160 Bit für Elliptische-Kurven-Kryptographieanwendungen oder aber mit einer Länge von in der Größenordnung von 1024 oder 2048 Bit für RSA-Berechnungen. Dies steht in deutlichem Gegensatz zu typischen 8, 16, 32 oder 64-Bit-CPUs, wie sie in Allzweckprozessoren zu finden sind.

Bezüglich der Anzahl von Elementarzellen in einem Addiererblock wird eine Zahl zwischen 8 und 16 Elementarzellen und insbesondere eine Anzahl von 16 Elementarzellen für den Fall einer zweistufigen Panik-Hierarchie bevorzugt. Ist eine dritte Panik-Hierarchie vorgesehen, so wird es bevorzugt, die Anzahl der Elementarzellen in einem Block auf beispielsweise 8 zu reduzieren, was unmittelbar mit einer doppelt so großen Normaltaktgeschwindigkeit korrespondiert. Durch Bereitstellen von Carry-Umwegen kann auch die Panik-Geschwindigkeit (im Falle einer zweistufigen Panik-Hierarchie) und/oder die Doppel-Panik-Geschwindigkeit (im Fall einer dreistufigen Panik-Hierarchie) noch annähernd so groß gehalten werden wie im Falle der Normalgeschwindigkeit, da ein Carry einen Carry-Bypass typischerweise wesentlich schneller durchläuft als den Addiererblock selbst.

### Bezugszeichenliste

- 10: erster Addiererblock
- 12: zweiter Addiererblock
- 14: dritter Addiererblock
- 16: Einzeladdierer
- 17: zweit-niederstwertige Stelle des ersten Addiererblocks
- 18: Summen-Bit-Register
- 20: höchstwertige Elementarzelle des zweiten Addiererblocks
- 22: niederstwertige Stelle des dritten Addiererblocks
- 24: niederstwertige Stelle des zweiten Addiererblocks
- 26: erste Durchlauf-Einrichtung
- 28: zweite Durchlauf-Einrichtung
- 30: dritte Durchlauf-Einrichtung
- 32: Carry-Bypass-Steuersignale
- 34: Carry-Steuerung
- 36: Carry-Steuerung
- 38: Carry-Steuerung
- 40: Carry-Bypass des ersten Addiererblocks
- 42: Carry-Bypass des zweiten Addiererblocks
- 44: Carry-Bypass des dritten Addiererblocks
- 50: Steuereinrichtung
- 52: Taktgenerator
- 54: Taktleitung für den ersten Addiererblock
- 56: Taktleitung für den zweiten Addiererblock
- 58: Taktleitung für den dritten Addiererblock
- 60: Normal-Geschwindigkeit
- 62: Panik-Geschwindigkeit
- 64: Doppel-Panik-Geschwindigkeit
- 120: Eingangs-Übertrag für den zweiten Addiererblock
- 140: Eingangs-Übertrag für den dritten Addiererblock
- 260: Panik-Signal der ersten Durchlauf-Einrichtung
- 280: Panik-Signal der zweiten Durchlauf-Einrichtung
- 300: Panik-Signal der dritten Durchlauf-Einrichtung

## Patentansprüche

1. Rechenwerk mit folgenden Merkmalen:
einem ersten Addiererblock (10) mit einer ersten Mehrzahl von Einzeladdierern und einer Durchlauf-Einrichtung (26) zum Bestimmen, ob ein Übertrag den ersten Addiererblock (10) vollständig durchläuft;
einem zweiten, dem ersten Addiererblock (10) nachgeschalteten Addiererblock (12) mit einer zweiten Mehrzahl von Einzeladdierern und einer zweiten Durchlauf-Einrichtung (28) zum Bestimmen, ob ein Übertrag den zweiten Addiererblock (12) vollständig durchläuft;
einem dritten, dem zweiten Addiererblock (12) nachgeschalteten Addiererblock (14) mit einer dritten Mehrzahl von Einzeladdierern und einer dritten Durchlauf-Einrichtung (30) zum Bestimmen, ob ein Übertrag den dritten Addiererblock vollständig durchläuft;
einem Taktgenerator (52) zum Erzeugen eines Takts, mit dem der erste, der zweite und der dritte Addiererblock (10, 12, 14) mit zu addierenden Eingangswerten gespeist werden, wobei der Takt in dem Fall, in dem die erste, die zweite und die dritte Durchlaufeinrichtung (26, 28, 30) bestimmen, daß kein Übertrag einen Addiererblock vollständig durchläuft, eine Taktperiode hat, die mindestens so groß ist, daß ein Übertrag einen Addiererblock nahezu vollständig durchlaufen kann und zumindest einen Teil eines vorausgehenden Addiererblocks durchlaufen kann; und
einer Steuereinrichtung (50) zum Steuern des Taktgenerators so, daß in dem Fall, in dem die erste, die zweite oder die dritte Einrichtung (26, 28, 30) bestimmen, daß ein Übertrag einen entsprechenden Addiererblock (10, 12, 14) vollständig durchläuft, der Takt eine Taktperiode hat, die ausreichend ist, daß ein Übertrag den entsprechenden Addiererblock vollständig durchlaufen kann, den dem entsprechenden Addiererblock nachgeschalteten Addiererblock nahezu vollständig durchlaufen kann und zumindest einen Teil eines dem entsprechenden Addiererblock vorausgehenden Addiererblock durchlaufen kann, und die kleiner ist als die Zeit, die nötig ist, daß ein Übertrag durch alle Addiererblöcke laufen kann, und
daß in dem Fall, in dem die erste, die zweite oder die dritte Durchlaufeinrichtung (26, 28, 30) bestimmen, daß ein Übertrag zwei benachbarte Addiererblöcke vollständig durchläuft, der Takt eine Taktperiode hat, die mindestens so groß ist, daß ein Übertrag die zwei benachbarten Addiererblöcke vollständig durchlaufen kann, einen den benachbarten Addiererblöcken folgenden Addiererblock nahezu vollständig durchlaufen kann und zumindest einen Teil des den benachbarten Addiererblöcken vorausgehenden Addiererblocks durchlaufen kann.

2. Rechenwerk nach Anspruch 1,
bei dem der Teil des nahezu vollständig zu durchlaufenden vorausgehenden Addiererblocks die Anzahl der Einzeladdierer des vorausgehenden Addiererblocks weniger einem Einzeladdierer ist.

3. Rechenwerk nach Anspruch 1 oder 2, bei dem eine Zeit, die nötig ist, um einen Addiererblock nahezu vollständig zu durchlaufen, gleich der Zeit ist, um alle Einzeladdierer weniger einem Einzeladdierer des Addiererblocks zu durchlaufen.

4. Rechenwerk nach Anspruch 3,
bei dem innerhalb eines Addiererblocks Unterblöcke von Einzeladdierern vorhanden sind, wobei in dem Fall, in dem alle Einzeladdierer eines Unterblocks ein Propagate-Signal liefern, ein Unterblock-Übertrag-Umweg für den Unterblock aktivierbar ist, um die Zeit, die ein Übertrag benötigt, um den Unterblock zu durchlaufen, im Vergleich zu dem Fall zu verkürzen, bei dem kein Übertrag-Umweg für den Unterblock vorhanden ist.

5. Rechenwerk nach einem der vorhergehenden Ansprüche,
bei dem die erste, zweite oder dritte Durchlaufeinrichtung (26, 28, 30) unter Verwendung eines Übertrag-Vorausgriff-Parameters arbeitet.

6. Rechenwerk nach einem der vorhergehenden Ansprüche,
bei dem einem Addiererblock (10, 12, 14) ein Addiererblock-Übertrag-Umweg (40, 42, 44) zugeordnet ist, wobei in dem Fall, in dem die Durchlauf-Einrichtung (26, 28, 30) bestimmt, daß ein Übertrag den Addiererblock vollständig durchläuft, der Addiererblock-Übertrag-Umweg aktiviert wird (32, 34, 36, 38), und
bei dem die Steuereinrichtung (50) ausgebildet ist, um den Taktgenerator so zu steuern, daß eine Zeit, die für einen vollständigen Durchlauf des Addiererblocks angesetzt wird, gleich einer Zeit ist, die der Übertrag benötigt, um den Addiererblock-Übertrag-Umweg zu durchlaufen.

7. Rechenwerk nach Anspruch 6,
bei dem jedem Addiererblock ein Addiererblock-Übertrag-Umweg zugeordnet ist, der aktivierbar ist, wenn die entsprechende Durchlauf-Einrichtung bestimmt, daß der Übertrag den Addiererblock durchläuft.

8. Rechenwerk nach einem der vorhergehenden Ansprüche,
bei dem in dem Fall, in dem bei zumindest zwei benachbarten Addiererblöcken bestimmt wird, daß der Übertrag beide Addiererblöcke durchläuft, die Steuereinrichtung (50) ausgebildet ist, um die Taktperiode so lang zu machen, daß ein Übertrag das gesamte Rechenwerk durchlaufen kann.

9. Rechenwerk nach einem der Ansprüche 1 bis 7,
bei dem die Steuereinrichtung ausgebildet ist, um erst in dem Fall, in dem die Durchlauf-Einrichtungen von drei benachbarten Addiererblöcken bestimmen, daß der Übertrag die entsprechenden Addiererblöcke vollständig durchläuft, die Taktperiode so lang zu machen, daß ein Übertrag das gesamte Rechenwerk durchlaufen kann.

10. Rechenwerk nach einem der vorhergehenden Ansprüche,
bei dem die erste, die zweite und die dritte Mehrzahl von Einzeladdierern jeweils größer oder gleich 8 und kleiner oder gleich 16 betragen.

11. Rechenwerk nach einem der vorhergehenden Ansprüche,
bei dem ein Addiererblock eine Mehrzahl von Unterblöcken aufweist, wobei die Unterblöcke jeweils als Carry-Look-Ahead-Addierer für eine Menge von Bits ausgestaltet sind, und wobei die Mehrzahl von Unterblöcken in einem Addiererblock als Ripple-Carry-Addierer verschaltet ist.

12. Rechenwerk nach einem der vorhergehenden Ansprüche,
bei dem der Taktgenerator (52) ausgebildet ist, um einen Grundtakt mit einer festen Taktfrequenz zu erzeugen, und
bei dem die Steuereinrichtung ausgebildet ist, um den Taktgenerator so zu steuern, daß im Falle einer Vergrößerung der Taktperiode, mit der zu addierende Eingangswerte gespeist werden, eine variable Anzahl von Leer-Grundtaktzyklen zwischen zwei Grundtaktzyklen eingespeist werden, bei denen zu addierende Eingangswerte gespeist werden.

13. Rechenwerk nach einem der vorhergehenden Ansprüche, das als Langzahlrechenwerk ausgebildet ist und mehr als 150 Einzeladdierer aufweist.

14. Verfahren zum Addieren mittels eines ersten Addiererblocks (10) mit einer ersten Mehrzahl von Einzeladdierern, mittels eines zweiten, dem ersten Addiererblock (10) nachgeschalteten zweiten Addiererblocks (12) mit einer zweiten Mehrzahl von Einzeladdierern und mittels einem dritten, dem zweiten Addiererblock nachgeschalteten Addiererblocks (14) mit einer dritten Mehrzahl von Einzeladdierern, mit folgenden Schritten:
Bestimmen (26, 28, 30) ob ein Übertrag den ersten, den zweiten oder den dritten Addiererblock vollständig durchläuft; und
falls ein Übertrag keinen Addiererblock vollständig durchläuft, Speisen des Rechenwerks mit Eingangsoperanden mit einem Takt, der eine Taktperiode hat, die mindestens so groß ist, daß ein Übertrag einen Addiererblock nahezu vollständig durchlaufen kann und zumindest einen Teil eines vorausgehenden Addiererblocks durchlaufen kann;
falls bestimmt wird, daß ein Übertrag einen Addiererblock vollständig durchläuft, Speisen des Rechenwerks mit zu addierenden Eingangswerten mit einem Takt, der eine Taktperiode hat, die ausreichend ist, daß ein Übertrag den entsprechenden Addiererblock vollständig durchlaufen kann, den dem entsprechenden Addiererblock nachgeschalteten Addiererblock nahezu vollständig durchlaufen kann und zumindest einen Teil eines dem entsprechenden Addiererblock vorausgehenden Addiererblocks durchlaufen kann, und die kleiner ist als die Zeit, die nötig ist, daß ein Übertrag alle Addiererblöcke durchlaufen kann; und
falls bestimmt wird, daß ein Übertrag zwei benachbarte Addiererblöcke vollständig durchläuft, Speisen des Rechenwerks mit Eingangswerten mit einem Takt, der eine Taktperiode hat, die so groß ist, daß ein Übertrag die zwei benachbarten Blöcke vollständig durchlaufen kann, einen den benachbarten Blöcken nachgeschalteten Addiererblock nahezu vollständig durchlaufen kann und zumindest einen Teil des den benachbarten Blöcken vorausgehenden Addiererblocks durchlaufen kann.

## Claims

1. Calculating unit, comprising:
a first adder block (10) with a first plurality of single adders and a pass means (26) for determining, whether a carry passes fully through the first adder block (10);
a second adder block downstream of the first adder block with a second plurality of single adders and a second pass means (28) for determining, whether a carry passes fully through the second adder block (12);
a third adder block downstream of the second adder block with a third plurality of single adders and a third pass means (30) for determining, whether a carry passes fully through the third adder block (12);
a clock generator (52) for generating a clock, with which the first, the second and the third adder blocks (10, 12, 14) are fed with input values to be added, wherein in the case where the first, the second and the third pass means (26, 28, 30) determine that no carry passes fully through an adder block, the clock has a clock period, which is at least so high that a carry can pass almost fully through an adder block, and can pass through at least part of one previous adder block; and
control means (50) for controlling the clock generator, so that in the case, where the first, the second or the third means (26, 28, 30) determine that a carry passes fully through a respective adder block (10, 12, 14), the clock has a clock period which is sufficient that a carry can pass fully through the respective adder block, can pass almost fully through the adder block downstream of the respective adder block and can pass at least part of an adder block upstream of the respective adder block, and which is lesser than the time, which is necessary for a carry to pass through all adder blocks; and
that in the case where the first, the second or the third pass means (26, 28, 30) determine that a carry passes fully through two adjacent adder blocks, the clock has a clock period, which is at least so high that a carry can fully pass through the two adjacent adder blocks, can pass almost fully through an adder block following the adjacent adder blocks, and can pass at least through part of the adder block upstream of the adjacent adder blocks.

2. Calculating unit according to claim 1,
wherein the part of the previous adder block to be almost fully passed is the number of single adders of the previous adder block minus one single adder.

3. Calculating unit according to claim 1 or 2,
wherein a time, which is necessary to pass almost fully through one adder block, is equal to the time to pass through all single adders minus one single adder of the adder block.

4. Calculating unit according to claim 3,
wherein, within an adder block, sub-blocks of single adders are present, wherein in the case where all single adders of an sub-block provide a propagate signal, a sub-block carry bypass for the sub-block is activable to shorten the time the carry needs to pass through the sub-block, in comparison to the case where no carry bypass is present for the sub-block.

5. Calculating unit according to one of the previous claims,
wherein the first, second or third pass means (26, 28, 30) operates by using a carry look-ahead parameter.

6. Calculating unit according to one of the previous claims,
wherein an adder block carry bypass (40, 42, 44) is associated to an adder block (10, 12, 14), wherein in the case where the pass means (26, 28, 30) determines that a carry passes fully through the adder block, the adder block carry bypass is activated (32, 34, 36, 38), and
wherein the control means (50) is formed to control the clock generator such that a time, which is set for a full pass through the adder block, is equal to a time the carry needs to pass through the adder block carry bypass.

7. Calculating unit according to claim 6,
wherein an adder block carry bypass is associated to each adder block, which can be activated when the respective pass means determines that the carry passes through the adder block.

8. Calculating unit according to one of the previous claims,
wherein in the case where it is determined that in at least two adjacent adder blocks the carry passes through both adder blocks, control means (50) is formed to make the clock period so long that a carry can pass through the whole calculating unit.

9. Calculating unit according to one of claims 1 to 7,
wherein the control means is formed to make the clock period so long that a carry can pass through the whole calculating unit, only in the case where the pass means of three adjacent adder blocks determines that the carry fully passes through the respective adder blocks.

10. Calculating unit according to one of the previous claims,
wherein the first, the second and the third pluralities of single adders are each larger or equal to 8 and smaller or equal to 16.

11. Calculating unit according to one of the previous claims,
wherein an adder block comprises a plurality of sub-blocks, wherein the sub-blocks are each formed as carry-look-ahead adders for a plurality of bits, and wherein the plurality of sub-blocks in an adder block is connected to form a ripple carry adder.

12. Calculating unit according to one of the previous claims,
wherein the clock generator (52) is formed to generate a base clock with a fixed clock frequency, and
wherein the control means is formed to control the clock generator such that in the case of an increase of the clock period with which the input values to be added are fed, a variable number of idle base clock cycles are fed in between two base clock cycles, where input values to be added are fed.

13. Calculating unit according to one of the previous claims, which is formed as a long-number calculating unit and comprises more than 150 single adders.

14. Method for adding using a first adder block (10) with a first plurality of single adders, a second adder block (12) downstream of the first adder block (10) with a second plurality of single adders and a third adder block (14) downstream of the second adder block with a third plurality of single adders, comprising:
determining (26, 28, 30), whether a carry fully passes through the first, the second or the third adder block; and
if a carry does not fully pass through any adder block, feeding the calculating unit with input operands with a clock, which has a clock period that is at least so high that a carry can merely fully pass through one adder block and can pass at least through a part of a previous adder block;
if it is determined that a carry passes fully through an adder block, feeding the calculating unit with input values to be added with a clock, which has a clock period, which is sufficient that a carry can pass fully through the respective adder block, can almost fully pass through the adder block downstream the respective adder block, and can pass through at least part of the adder block upstream of the respective adder block, and which is lesser than the time, which is needed that a carry can pass through all adder blocks; and
if it is determined, that a carry fully passes through two adjacent adder blocks, feeding the calculating unit with input values with a clock, which has a clock period, which is so high that a carry can fully pass through the two adjacent blocks, can almost fully pass through an adder block downstream of the adjacent blocks, and can pass at least through a part of the adder block upstream of the adjacent blocks.

## Revendications

1. Unité de calcul comportant les caractéristiques suivantes :
un premier bloc d'additionneurs (10) comportant une première pluralité d'additionneurs individuels et un dispositif de passage (26) destiné à déterminer si un report passe totalement le premier bloc d'additionneurs (10) ;
un deuxième bloc d'additionneurs (12), monté en aval du premier bloc d'additionneurs (10) et comportant une deuxième pluralité d'additionneurs individuels, et un deuxième dispositif de passage (28) destiné à déterminer si un report passe totalement le deuxième bloc d'additionneurs (12) ;
un troisième bloc d'additionneurs (14), monté en aval du deuxième bloc d'additionneurs (12) et comportant une troisième pluralité d'additionneurs individuels, et un troisième dispositif de passage (30) destiné à déterminer si un report passe totalement le troisième bloc d'additionneurs ;
un générateur de cadence (52) destiné à générer une cadence à laquelle les premier, deuxième et troisième blocs d'additionneurs (10, 12, 14) sont alimentés en des valeurs d'entrée à ajouter, la cadence ayant, dans le cas où les premier, deuxième et troisième dispositifs de passage (26, 28, 30) déterminent qu'aucun report ne passe totalement un bloc d'additionneurs, une période de cadence qui a au moins une dimension telle qu'un report peut passer à peu près totalement un bloc d'additionneurs et peut passer au moins une partie d'un bloc d'additionneurs précédent ; et
un dispositif de commande (50) destiné à commander le générateur de cadence de telle sorte que
dans le cas où les premier, deuxième et troisième dispositifs (26, 28, 30) déterminent qu'un report passe totalement un bloc d'additionneurs correspondant (10, 12, 14), la cadence a une période qui est suffisante pour qu'un report puisse passer totalement le bloc d'additionneurs correspondant, passer à peu près totalement le bloc d'additionneurs monté en aval du bloc d'additionneurs correspondant et passer au moins une partie d'un bloc d'additionneurs précédant le bloc d'additionneurs correspondant et qui est inférieure au temps nécessaire pour qu'un report puisse passer tous les blocs d'additionneurs et
dans le cas où les premier, deuxième et troisième dispositifs de passage (26, 28, 30) détermine qu'un report passe totalement deux blocs d'additionneurs voisins, la cadence a une période qui a au moins une dimension telle qu'un report peut passer totalement les deux blocs d'additionneurs voisins, passer à peu près totalement un bloc d'additionneurs suivant les blocs d'additionneurs voisins et passer au moins une partie du bloc d'additionneurs précédant les blocs d'additionneurs voisins.

2. Unité de calcul selon la revendication 1, dans laquelle la partie du bloc d'additionneurs précédents qui doit être passée à peu près totalement correspond au nombre d'additionneurs individuels du bloc d'additionneurs précédent moins un additionneur individuel.

3. Unité de calcul selon la revendication 1 ou 2, dans laquelle un temps qui est nécessaire pour passer à peu près totalement un bloc d'additionneurs est égal au temps pour passer tous les additionneurs individuels moins un additionneur individuel du bloc d'additionneurs.

4. Unité de calcul selon la revendication 3, dans laquelle à l'intérieur d'un bloc d'additionneurs se trouvent des sous-blocs d'additionneurs individuels, une déviation report pour sous-bloc pouvant être activée pour le sous-bloc dans le cas où tous les additionneurs individuels d'un sous-bloc délivre un signal Propagate, afin de réduire le temps qui est nécessaire au report pour passer le sous-bloc, par rapport au cas où il n'y a pas de déviation de report pour le sous-bloc.

5. Unité de calcul selon l'une des revendications précédentes, dans laquelle les premier, deuxième ou troisième dispositifs de passage (26, 28, 30) fonctionne en utilisant un paramètre d'anticipation de report.

6. Unité de calcul selon l'une des revendications précédentes, dans laquelle une déviation de report pour bloc d'additionneurs (40, 42, 44) est associée à un bloc d'additionneur (10, 12, 14), la déviation de report pour bloc d'additionneurs étant activée (32, 34, 36, 38) dans le cas où le dispositif de passage (26, 28, 30) détermine qu'un report passe totalement le bloc d'additionneurs, et
le dispositif de commande (50) est conformé pour commander le générateur de cadence de sorte qu'un temps qui est nécessaire à un passage total du bloc d'additionneurs est égal à un temps qui est nécessaire au report pour passer la déviation de report pour bloc d'additionneurs.

7. Unité de calcul selon la revendication 6, dans laquelle une déviation de report pour bloc d'additionneurs est associée à chaque bloc d'additionneurs et peut être activée lorsque le dispositif de passage correspondant détermine que le report passe le bloc d'additionneurs.

8. Unité de calcul selon l'une des revendications précédentes, dans laquelle, dans le cas où on détermine pour au moins deux blocs d'additionneurs voisins que le report passe deux blocs d'additionneurs, le dispositif de commande (50) est conformer pour prolonger la période de cadence de manière à ce qu'un report puisse passer toute l'unité de calcul.

9. Unité de calcul selon l'une des revendications 1 à 7, dans laquelle le dispositif de commande est conformé pour prolonger la période de cadence de manière à ce qu'un report puisse passer toute l'unité de calcul, seulement dans le cas où les dispositifs de passage de trois blocs d'additionneurs voisins déterminent que le report passe totalement les blocs d'additionneurs correspondants.

10. Unité de calcul selon l'une des revendications précédentes, dans laquelle les première, deuxième et troisième pluralités d'additionneurs individuels sont chacune supérieure ou égal à 8 et inférieure ou égale à 16.

11. Unité de calcul selon l'une des revendications précédentes, dans laquelle un bloc d'additionneurs comporte une pluralité de sous-blocs, les sous-blocs étant chacun conformés en additionneur Carry-Look-Ahead pour une quantité de bits et la pluralité de sous-blocs dans un bloc d'additionneurs est câblé en additionneur Ripple-Carry.

12. Unité de calcul selon l'une des revendications précédentes, dans laquelle le générateur de cadence (52) est conformé pour générer une cadence de base à une fréquence de cadence fixe et dans laquelle le dispositif de commande est conformé pour commander le générateur de cadence telle sorte que, en cas d'augmentation de la période de cadence avec laquelle est effectuée l'alimentation en valeurs d'entrée à ajouter, il est introduit, entre deux cycles de cadence de base, un nombre variable de cycles de cadence de base à vide pendant lesquels il est effectuée l'alimentation en valeurs d'entrée à ajouter.

13. Unité de calcul selon l'une des revendications précédentes, laquelle est conformée en unité de calcul à nombre long et comporte plus de 150 additionneurs individuels.

14. Procédé d'addition au moyen d'un premier bloc d'additionneurs (10) comportant une première pluralité d'additionneurs individuels, au moyen d'un deuxième bloc d'additionneurs (12), monté en aval du premier bloc d'additionneurs (10) et comportant une deuxième pluralité d'additionneurs individuels et au moyen d'un troisième bloc d'additionneurs (14), monté en aval du deuxième bloc d'additionneurs et comportant une troisième pluralité d'additionneurs individuels, le procédé comportant les étapes suivantes consistant à :
déterminer (26, 28, 30) si un report passe totalement les premier, deuxième ou troisième blocs d'additionneurs ; et
dans le cas où un report ne passe totalement aucun bloc d'additionneurs, alimenter l'unité de calcul en opérandes d'entrée a une cadence qui a une période qui a au moins une dimension telle qu'un report peut passer à peu près totalement un bloc d'additionneurs et au moins une partie d'un bloc d'additionneurs précédent ;
dans le cas où il est déterminé qu'un report passe totalement un bloc d'additionneurs, alimenter l'unité de calcul en valeurs d'entrée à additionner avec une cadence qui a une période qui est suffisante pour qu'un report puisse passer totalement le bloc d'additionneurs correspondant, passer à peu près totalement le bloc d'additionneurs monté en aval du bloc d'additionneurs correspondant et au moins une partie d'un bloc d'additionneurs précédent le bloc d'additionneurs correspondant, et qui est inférieure au temps qu'est nécessaire pour qu'un report puisse passer tous les blocs d'additionneurs ; et
dans le cas où il est déterminé qu'un report passe totalement deux blocs d'additionneurs voisins, alimenter l'unité de calcul en valeurs d'entrée a une cadence qui a une période qui a au moins une dimension telle qu'un report peut passer totalement deux blocs adjacents, passer à peu près totalement un bloc d'additionneurs monté en aval des blocs adjacents et passer au moins une partie du bloc d'additionneurs précédent les blocs adjacents.
